# EUROPEAN PATENT SPECIFICATION

(11) **EP 1 285 551 B1**
(45) Date of publication and mention of the grant of the patent: **12.12.2007**
(21) Application number: 01934729.3
(22) Date of filing: 11.05.2001
(51) Int. Cl.: H04Q 7/34, H04Q 3/00

(54) **OPERATIONS AND MAINTENANCE OF RADIO BASE STATIONS IN MOBILE TELECOMMUNICATION SYSTEMS**
BETRIEB UND WARTUNG VON RADIO-BASISSTATIONEN IN EINEM MOBILEN TELEKOMMUNIKATIONSSYSTEM
FONCTIONNEMENT ET MAINTENANCE DE STATIONS DE BASE RADIO DE SYSTEMES DE TELECOMMUNICATIONS MOBILES

(30) Priority: 30.05.2000 US 580844
(43) Date of publication of application: 26.02.2003
(73) Proprietor: TELEFONAKTIEBOLAGET LM ERICSSON (publ), 164 83 Stockholm (SE)
(72) Inventor: LUNDH, Peter, S-127 61 Skärholmen (SE); RUUSKA, Tauno, S-192 48 Sollentuna (SE)
(74) Representative: Kühn, Friedrich Heinrich
(86) International application number: PCT/SE2001/001046
(87) International publication number: WO 2001/093615

(56) References cited:
- EP-A- 0 893 929
- EP-A- 0 986 285
- WO-A-99/17572
- GB-A- 2 243 055

## Description

### BACKGROUND OF THE INVENTION

### Technical Field of the Invention

The present invention relates in general to the telecommunications field and, in particular, to a method and system for improving the Operations and Maintenance (OAM) of base stations in mobile telecommunication systems.

### Description of Related Art

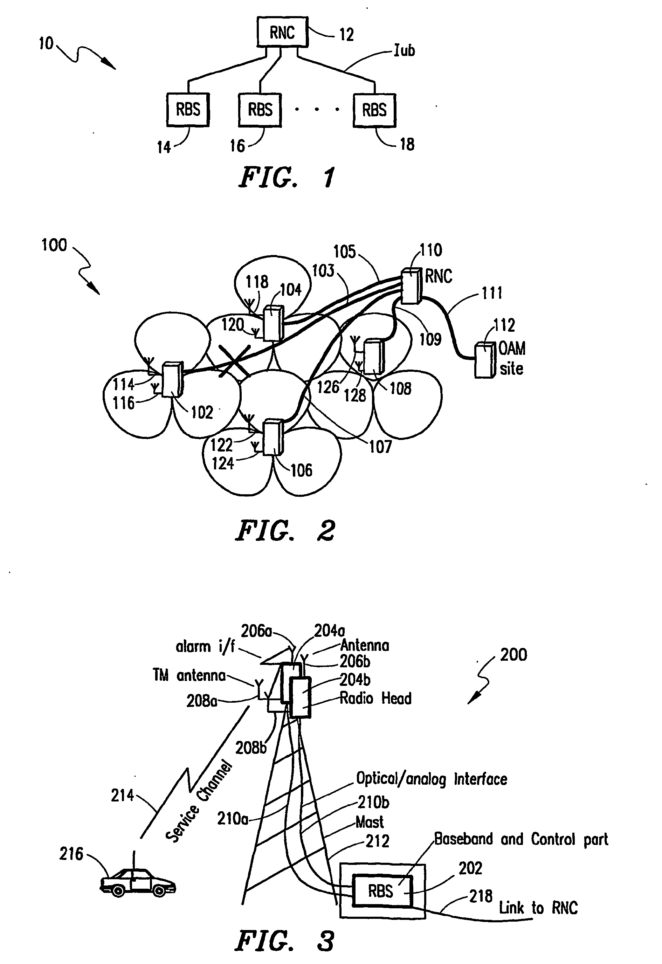

Existing and newly developed mobile telephony systems are composed of a plurality of common nodes, such as Radio Network Controllers (RNCs) or Base Station Controllers (BSCs), and a plurality of Radio Base Stations (RBSs, base stations, base transceiver stations, 3^{rd} Generation Partnership Project (3GPP) Nodes B, etc.). Each RBS is physically connected to an RNC (an "upper" node) via a transmission link (e.g., an Iub link in a 3^{rd} Generation Wideband-Code Division Multiple Access (WCDMA) network). An example of such an arrangement is shown in FIGURE 1. In some systems, the RBSs may be configured differently from the specific arrangement shown in FIGURE 1 (e.g., cascaded, etc.), but in any event, each RBS is still connected to an upper node (RNC) via a transmission link of some kind.

The OAM functions employed in existing and newly developed mobile telephony networks are typically performed over the transmission links between nodes. Consequently, if a software and/or hardware failure occurs in an RBS, the upper node or RNC can detect and analyze the failure via the transmission link between the two nodes. However, if a transmission link between an upper node (RNC) and an RBS goes down and is inoperable for a significant period of time, the upper node is unable to detect and/or correct any failure that occurs in that RBS during that period of downtime. For such reasons, a backup OAM procedure is usually followed by network operators, whereby the RBSs are also maintained with on-site visits by maintenance personnel. Such on-site visits are required if a transmission link carrying OAM information between nodes is determined to be down.

A significant problem associated with the OAM approaches currently being employed for base stations in existing and developing mobile or cellular systems is that the number of base station sites per network has been increasing significantly for a number of years, and the maintenance costs for such sites have been increasing significantly as well. Currently, one maintenance solution to this growth problem is to reduce base station downtime resulting from failures by building in redundancy wherever possible. For example, in certain digital switching subsystems, pairs of central processors are operated together in a parallel synchronous mode. If a primary processor fails, the "standby" processor can continue to handle traffic without seriously impacting customer service.

Nevertheless, even if a base station is designed with built-in redundancy, certain network components have such a high mean time between failure (MTBF) that they are intentionally not made redundant. Examples of such non-redundant network components are filters, power distribution components, and most importantly, the transmission links between base stations and the upper nodes. Consequently, when a transmission link between such nodes is inoperable, there is a substantial need for a new OAM approach that can be used to detect, analyze and correct failures (if possible) in a base station involved.

Another significant problem associated with the OAM approaches currently being employed for base stations in mobile or cellular systems relates to the fact that certain existing (e.g., Global System for Mobile Communications (GSM) and Time Division Multiple Access (TDMA)) systems and future systems (e.g., so-called 3^{rd} Generation System) will include base stations with mast-mounted cellular equipment. Essentially, the baseband parts of the base station (e.g., RBS in a 3^{rd} Generation System) will be located at ground level, and the radio parts (included the power amplifier sections) will be mounted on the antenna mast, either nearby or integrated with the antenna section.

With the advent of such mast-mounted equipment in the future, the OAM functions will become more important in terms of an operator's ability to maintain base station equipment reliability, and also with respect to the ease of maintenance. In this regard, a problem with such mast-mounted base station equipment is that it will be more difficult to access, test and maintain. This problem will be more acute especially, for example, if the link between the ground-level and mast-mounted base station equipment fails. As described in detail below, the present invention successfully resolves the above-described problems and other related problems.

The document GB 2 243 055 A discloses a cellular radio communications system and a base station receiver equipment that measures a signal (e.g. timing, signal strength) of a mobile transceiver and instructs the mobile to adjust that parameter of its transmitted signals. A subsidiary transceiver equipment is provided in relative proximity to the base station transceiver equipment. The subsidiary equipment can change the parameter of its transmissions to simulate relative distance from the base station transceiver equipment for test purposes.

### SUMMARY OF THE INVENTION

In accordance with a first embodiment of the present invention, a method and system are provided for improving the OAM of base stations in mobile communication systems, whereby an OAM connection can be made with the base station over a radio air interface so that failures that occur in the base station can be detected, analyzed and corrected (if possible), even if the normal transmission link to the base station has gone down or become otherwise inoperable. For this exemplary embodiment, a Test Mobile Station (TMS) is co-located with or located nearby an RBS. The TMS monitors the RBS operations, and can provide base station operability information to an RNC and/or OAM unit by a radio connection over an air interface between the TMS and the RNC and/or

OAM to convey OAM information.

In accordance with a second embodiment of the present invention, a method and system are provided for improving the OAM of base station equipment in mobile communication systems, whereby a TMS is co-located with or located nearby a radio base station's mast-mounted equipment. As such, the TMS can be linked to a mobile terminal via a radio air interface (e.g., service chanrtel), which can be used to supervise and control the base station's OAM functions. In other words, the base station's equipment can be tested and operated from (or via) a mobile terminal without having to physically enter the site. Also, the TMS can send an alarm message to the mobile terminal (e.g., linked to an OAM service center) if the communication link between the ground-level equipment and mast-mounted equipment should fail.

An important technical advantage of the present invention is that base station down time can be reduced significantly even if the normal maintenance communications link to the base station is down.

Another important technical advantage of the present invention is that the costs for redundant transmission links can be avoided.

Yet another important technical advantage of the present invention is that operator maintenance costs can be lowered.

Still another important technical advantage of the present invention is that a failed base station or node may be detected, the fault analyzed, and the base station or node restarted by a message conveyed over the existing air interface.

Still another important technical advantage of the present invention is that the reliability and ease of maintenance of base station mast-mounted equipment can be improved.

### BRIEF DESCRIPTION OF THE DRAWINGS

A more complete understanding of the method and apparatus of the present invention may be had by reference to the following detailed description when taken in conjunction with the accompanying drawings wherein:
FIGURE 1 is a block diagram of an exemplary cellular network with a plurality of RBSs physically connected to an upper node via a transmission link;
FIGURE 2 is a block diagram of an exemplary mobile communications network, which can be used to implement a first embodiment of the present invention;
FIGURE 3 is a block diagram of an exemplary radio base station that can be used to implement a second embodiment of the present invention; and
FIGURE 4 is a block diagram of an exemplary mast-mounted radio unit, which can be used to implement a radio unit such as one shown in FIGURE 3.

### DETAILED DESCRIPTION OF THE DRAWINGS

Embodiments of the present invention and its advantages are best understood by referring to FIGUREs 1-4 of the drawings, like numerals being used for like and corresponding parts of the various drawings.

In accordance with a first embodiment of the present invention, a method and system are provided for improving the OAM of base stations in mobile communication systems, whereby an OAM connection can be made with the base station over a radio air interface so that failures that occur in the base station can be detected, analyzed and corrected (if possible), even if the normal transmission link to the base station has gone down or become otherwise inoperable. For this exemplary embodiment, a TMS is co-located with or located nearby an RBS. The TMS monitors the RBS' operations, and can provide base station operability and maintenance information to an RNC and/or OAM unit via an existing radio air interface if the normal transmission link is down.

Specifically, FIGURE 2 is a block diagram of an exemplary mobile communications network 100, which can be used to implement a first embodiment of the present invention. For example, the network 100 can be a TDMA cellular network such as a network in the GSM, or a CDMA or WCDMA cellular network operating, for example, in accordance with the IS-95 standard. Notably, the present invention can be implemented in any existing or planned mobile communications network wherein one or more radio base stations are connected to an upper node and/or OAM subsystem in the network via a "primary" transmission link of some kind (e.g., wireline, fiber optic link, microwave link, etc.).

The exemplary network 100 includes a plurality of base stations (e.g., RBSs) 102, 104, 106, 108. Each base station is connected via a respective primary transmission link 103, 105, 107, 109 to an upper node (e.g., RNC) 110. For this embodiment, each primary transmission link 103,105,107 and 109 can comprise, for example, an Iub transmission link in a 3^{rd} Generation WCDMA system.

Each base station 102, 104, 106, 108 includes a respective TMS (represented by the smaller antennas) 116, 120, 124, 128, and a conventional transceiver (represented by the larger antennas) 114, 118, 122, 126. For this embodiment, each TMS 116, 120, 124, 128 is implemented as a cellular phone (or mobile radiotelephone) which, at a minimum, functions to monitor the operations of a respective co-located base station 102, 104, 106, 108 via a connection to the base station's internal control system. Also, each TMS 116,120,124,128 can transmit and receive messages via an existing radio air interface (e.g., between TMS 116 and nearby RBS 104). Notably, this air interface connection functions as a "secondary" OAM transmission link between these nodes.

For this embodiment, each TMS includes application software that is coupled to similar application software in the RBS to which that particular TMS is connected. As such, a TMS can be connected to an RBS' internal control system by a conventional hardware/software interface. For example, a TMS (e.g., 116) can be connected via a backplane interface to the RBS' (e.g., 102) main processor. In that way, a TMS' application software can communicate with the application software in the co-located RBS, and thereby transfer OAM information therebetween.

Each TMS is capable of receiving and answering a conventional call setup message over a radio air interface. For example, the network (100) can broadcast a page message from a neighboring RBS (e.g., 104) via the air interface, and a TMS (e.g., 116) can answer the page by transmitting a random access request message back to that neighboring RBS. At call setup, the application software in the TMS is capable of initiating the connection (e.g., made by the system RNC) of a common channel identity or dedicated channel identity (e.g., code in a CDMA network, or timeslot in a TDMA network) to that RBS' internal control subsystem when the primary transmission link to an upper node (RNC) is determined (by the network) to be down or otherwise inoperable. For example, the channel identity can be a circuit-switched channel (e.g., 64 kbps channel) or a packet data-oriented channel, which functions as a secondary transmission link to convey OAM messages between the OAM application software in the RBS (e.g., 104) and TMS (e.g., 116) involved.

For this embodiment, an upper node (e.g., RNC 110) includes application software that can convey OAM information via an existing radio air interface connection (e.g., a packet data connection or voice modem signalling connection) to/from a TMS' (e.g., 116) application software. In turn, the TMS' application software can convey the OAM information to/from the application software in the co-located RBS' (102) via a conventional internal control connection.

As mentioned above, a TMS can be an integral component of a particular base station. As such, the TMSs 116, 120, 124, 128 can be connected to a network controller or upper node (e.g., RNC 110) and/or an OAM unit 112 via an operable transmission link 103, 105, 107, 109, and/or 111. However, such an arrangement is described for illustrative purposes only, and the TMSs can be connected to the OAM unit 112 via any appropriate (primary) transmission link.

In operation, and in accordance with the first embodiment of the present invention, assume (as illustrated by the "X" shown in FIGURE 2) that the primary transmission link 103 between the RBS 102 and the RNC 110 has gone down or become otherwise inoperable. The OAM application software operating in the RBS 102 continuously (or at regular intervals) monitors the overall functioning of the RBS 102. Normally, this OAM application software in the RBS also regularly communicates with OAM application software in the OAM unit 112 (via the RNC 110), unless the primary transmission link 103 is down or inoperable. In this case, the OAM application software in the RBS 102 assumes that the primary transmission link is down and initiates OAM communications with the RNC and/or OAM unit on a common or dedicated channel over a radio air interface via a secondary OAM transmission link (e.g., between TMS 116 and RB S 104) and via primary transmission link 105 to the RNC 110.

The RNC 110 can then send one or more OAM messages (from the OAM unit 112) to the TMS 116 via a secondary return path (e.g., transmission link 105, and the air interface between RBS 104 and TMS 116). Alternatively, the RNC 110 can send one or more OAM messages to the TMS 116 and RBS 102 via a different secondary path if need be (e.g., transmission link 107, and the air interface between TMS 116 and RBS 106). Such OAM messages can be used, for example, to order the OAM application software in the RBS 102 to identify the problem with the inoperable link 103, or to identify, analyze, and/or correct a problem in the RBS 102 itself.

In response, the TMS 116 can transmit a reply OAM message over the established (or an alternate) secondary transmission link via the air interface with RBS 104 (or alternately RBS 106), which identifies a failure and its source. The RBS 104 (or alternate RBS within "hearing" distance) receives the reply OAM message and sends the message on to the RNC 110 via the primary transmission link 105 (or directly to the OAM unit 112, if so configured). In response, the RNC and/or the OAM unit can send an OAM message (e.g., order to correct the failure) from the RBS 104 to the TMS 116 and the RBS 102 via the secondary transmission link.

In summary, in accordance with the first embodiment of the present invention, if a network entity (e.g., RNC, OAM unit, etc.) is unable to communicate with a base station for OAM purposes because a primary transmission link (e.g., Iub link in a 3^{rd} Generation WCDMA system) is down, then the network entity can still contact the base station via a secondary transmission link (the air interface between that base station's TMS and a neighboring base station's transceiver). In this way, the network (e.g., OAM unit) can still determine if a failure has occurred in the base station, and if so, transmit (via the secondary transmission link) appropriate OAM messages to the base station in response (e.g., an error log or alarm list message, restart message, message to turn off the base station's radio frequency components, etc.).

In accordance with a second embodiment of the present invention, a method and system are provided for improving the OAM of base station equipment in mobile communication systems, whereby a TMS is co-located with or located nearby the mast-mounted equipment of a base station. The TMS can be linked to a service terminal (e.g., mobile terminal) via a radio air interface (e.g., service channel), and this arrangement can be used to supervise and control the OAM of the base station. In other words, the base station's equipment can be tested and operated from (or via) a service terminal without having to physically enter the site. Also, the TMS can send an alarm message to the service terminal (e.g., linked to an OAM service center) if the communication link between the base station's ground-level equipment and mast-mounted equipment should fail.

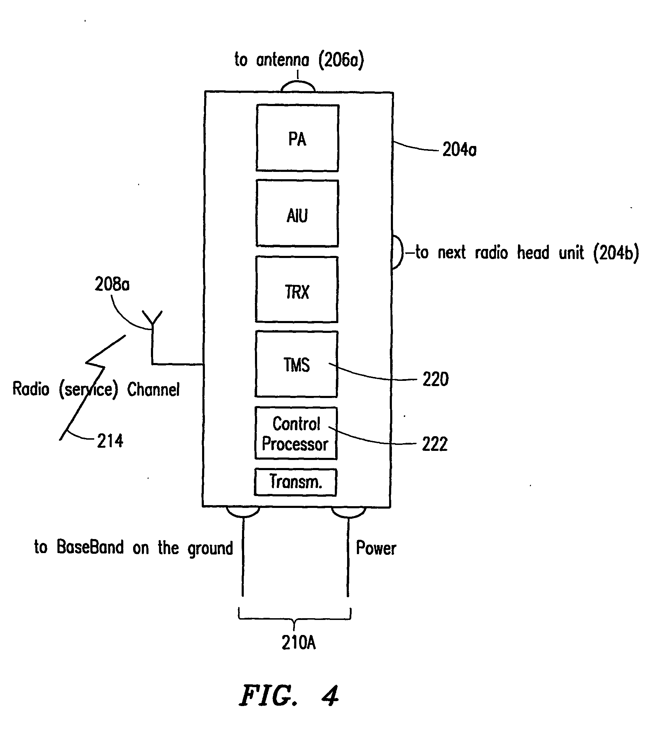

Specifically, FIGURE 3 is a block diagram of an exemplary radio base station 200 that can be used to implement the second embodiment of the present invention. FIGURE 4 is a block diagram of an exemplary mast-mounted radio head unit (e.g., such as the radio head unit 204a shown in FIGURE 3), which can be used to implement the second embodiment. Referring to FIGUREs 3 and 4, the radio base station (200) equipment shown includes a baseband and control section 202 located at ground level, and one or more radio head units (e.g., 204a, 204b) located on an antenna mast 212. Such a radio head unit can include a Power Amplifier (PA), Antenna Interface Unit (AIU), and Transceiver (TRX). The PA stage of each radio head unit (e.g., 204a) is connected to a respective transmit/receive antenna (e.g., 206a). Each radio head unit is connected to the baseband and control section 202 via a respective communication link and power connection (e.g., 210a, 210b). The baseband and control section 202 is connected to an RNC (not shown) via a communications link 218.

As illustrated by FIGURE 4, a TMS 220 can be integrated into each radio head unit (e.g., 204a). Alternatively, the TMS 220 can be located nearby (and connected to) a radio head unit. Each TMS is connected to a respective transmit/receive antenna (e.g., 208a, 208b). As such, a TMS (e.g., 220) can communicate with a service terminal (e.g., mobile terminal) 216 over a radio channel 214. Furthermore, each TMS can communicate with any other such TMS or any other radio head unit in use. Preferably, for this embodiment, the radio channel used is a radio service channel.

For this exemplary embodiment, the term "service channel" denotes a communication channel which can be used for exchanging access and control information between a TMS (server) and the users (clients) of a radio base station's functionality. As such, the radio base station's functions can be provided via the TMS. However, this service channel concept is not limited to any particular telecommunications standard or protocol, and can be a vendor-specific implementation. As preferred, the service channel implementation used can be based on the pertinent standard involved (e.g., 3GPP standard for a WCDMA system).

In operation, the entire radio base station 200 can be supervised and controlled from a terminal 216 by communicating over the radio channel 214. The terminal 216 can establish a radio channel connection by setting up a call with the specific equipment in a radio head unit (e.g., 204a) which contains the radio and antenna sections. For this embodiment, the terminal sets up a call with a TMS (e.g., 220) via the radio service channel and that TMS's antenna (e.g., 208a). The TMS can be interconnected with the other mast-mounted equipment via a standard communication bus. As such, each such TMS can be implemented by, for example, the TMS which is under development for the so-called 3^{rd} Generation mobile communication system.

For this embodiment, each TMS (e.g., 220) preferably operates with the following functionality: access logic, such as, for example, use of Random Access Channels (RACHs); service channels, such as, for example, using Data Traffic Channels (DTCHs); OAM applications (e.g., software OAM applications; and one or more local bus connection(s). Alternatively, a control processor (e.g., 222) in a radio head unit can maintain and execute the OAM application functions.

If a link (e.g., 210a) between the baseband and control section 202 at ground level and a mast-mounted radio head unit (e.g., 204a) fails, the control processor 222 can cause the TMS 220 associated with that radio head unit to transmit a link failure alarm message. The alarm message can be received by the terminal 216 (or, alternatively, another TMS or radio head unit 204b).

For example, the control processor or TMS associated with the radio head unit (e.g., 204a) directly affected by a failed link, can establish a connection with a service center responsible for OAM supervision by using a normal call setup procedure. The call can be carried out via another cell in the same RBS (e.g., via radio head unit 204b). As such, access to the other cell can be accomplished via that cell's radio antenna (e.g., 206b) or (conceivably, within the scope of the invention) the antenna (e.g., 208b) of the TMS associated with that cell (i.e., TMS co-located with or located nearby that cell's radio head unit). The alarm message can be communicated from the alternate mast-mounted radio head unit (e.g., 204b) to the ground level baseband and control part 202 via the operable link (e.g., 210b) and preferably on the normal OAM channel. The faulty link can be tested, and if possible, appropriate corrective action can be taken (e.g., the radio base station could be restarted from the mobile terminal).

In accordance with this embodiment, the ability to test and maintain the radio base station is improved, and thus the reliability of the radio base station is improved. As such, it is unnecessary to enter the radio base station's site in order to test the equipment at that site, and the site may be tested by technicians driving by the site. Such testing can be useful, for example, when a mast-mounted radio head unit has just been installed, or when other service tasks are to be performed on the radio head units. A site technician can perform the required OAM tasks without having to contact the OAM service center. Adjustments or functional tests can be performed automatically or manually from a service vehicle by use of the radio service channel. For example, automated test equipment can be mounted in or next to the terminal 216 (e.g., in a service vehicle).

Although a preferred embodiment of the method and apparatus of the present invention has been illustrated in the accompanying Drawings and described in the foregoing Detailed Description, it will be understood that the invention is not limited to the embodiment disclosed, but is capable of numerous rearrangements, modifications and substitutions without departing from the invention as set forth and defined by the following claims.

## Claims

1. A system for improving the OAM (Operations and Maintenance) of a mobile communications network (100) having an upper node (110) and a lower node, said upper node (110) being connected to said lower node by a primary transmission link (105),
**characterized in**
a test mobile station coupled to said lower node for at least monitoring operations of said lower node, and further coupled, at least when said primary transmission link is inoperable, to said upper node (110) over a secondary transmission link (116) being a radio connection over an air interface between said test mobile station and said upper node (110) to convey OAM information.

2. The system of Claim 1, wherein said primary transmission link (105) comprises a wireline connection between said upper node (110) and said lower node.

3. The system of Claim 1, wherein said primary transmission link (105) comprises a wireless connection between said upper node (110) and said lower node.

4. The system of Claim 1, wherein said test mobile station is coupled to said upper node (110) over said secondary transmission link (116) for a predetermined duration when said primary transmission link (105) is operable.

5. The system of Claim 1, wherein said upper node includes a radio network controller (110) and said lower node includes a radio base station (104).

6. The system of Claim 1, wherein said upper node comprises a base station controller and said lower node comprises a base station.

7. The system of Claim 1, wherein said primary transmission link (105) includes an lub link.

8. The system of Claim 1. wherein said secondary transmission link (116) includes a dedicated and/or common channel.

9. The system of Claim 1. wherein said communications network (100) is
**characterized by** a time division multiple access network.

10. The system of Claim 1, wherein said communications network (100) is
**characterized by** a code division multiple access network.

11. The system of Claim 1, wherein said secondary transmission link (116) is operable to convey packet-switched information.

12. The system of Claim 1, wherein said secondary transmission link (116) is operable to convey circuit-switched information.

13. The system of Claim 1. wherein said secondary transmission link (116) is operable to convey OAM information between said test mobile station and said upper node (110).

14. The system of Claim 1, wherein said secondary transmission link (116) is operable to convey OAM information between said test mobile station and an OAM subsystem (112) associated with said communications network (100).

15. The system of Claim 1, wherein said secondary transmission link (116) comprises an OAM transmission link.

16. A system for improving the OAM (Operations and Maintenance) of a radio base station (104) in a communications network (100) having a radio section of said radio base station (104), said radio section coupled to said communications network (100) by a link; said system
**characterized in**
a test mobile station substantially co-located with the radio section of said radio base station and operable to:
transmit a message in response to a predefined condition associated with said link; and
convey OAM information between said radio base station and a terminal via a radio channel.

17. The system of Claim 16, wherein said radio section is **characterized by** a radio head unit.

18. The system of Claim 16, wherein said terminal includes a mobile terminal.

19. The system of Claim 16, wherein said radio channel includes a radio service channel (214).

20. The system of Claim 16, wherein said radio section includes a mast-mounted section.

21. The system of Claim 16, wherein said radio base station (104) includes a mast-mounted radio base station.

22. The system of Claim 16. wherein said predefined condition comprises an operational failure.

23. A method for improving the OAM (Operations and Maintenance) of a mobile communication network (100),**characterized by**
connecting an upper node (110) to a lower node by a primary transmission link (105):
connecting a test mobile station to said lower node, said test mobile station monitoring said lower node;
connecting, if said primary transmission link (105) becomes inoperable, said test mobile station to said upper node (110) over a secondary transmission link (116) being a radio connection over an air interface between said test mobile station and said upper node (110); and
conveying OAM information between said lower node and said upper node (110) over said secondary transmission link (116).

24. The method of Claim 23, wherein said primary transmission link (105) comprises a wireline connection between said upper node (110) and said lower node.

25. The method of Claim 23, wherein said primary transmission link (105) comprises a wireless connection between said upper node (110) and said lower node.

26. The method of Claim 23, wherein said test mobile station is coupled to said upper node (110) over said secondary transmission link (116) for a predetermined duration when said primary transmission link (105) is operable.

27. The method of Claim 23, wherein said upper node includes a radio network controller (110) and said lower node comprises a radio base station (104).

28. The method of Claim 23, wherein said upper node includes a base station controller and said lower node comprises a base station.

29. The method of Claim 23, wherein said primary transmission link (105) comprises an lub link.

30. The method of Claim 23, wherein said secondary transmission link (116) includes a dedicated and/or common channel.

31. The method of Claim 23, wherein said communications network (100) is
**characterized by** a time division multiple access network.

32. The method of Claim 23, wherein said communications network (100) is
**characterized by** a code division multiple access network.

33. The method of Claim 23, wherein said secondary transmission link (116) is operable to convey packet-switched information.

34. The method of Claim 23, wherein said secondary transmission link (116) is operable to convey circuit-switched information.

35. The method of Claim 23, wherein said secondary transmission link (116) is operable to convey OAM information between said test mobile station and said upper node (110).

36. The method of Claim 23, wherein said secondary transmission link (116) is operable to convey OAM information between said test mobile station and an OAM subsystem (112) associated with said communications network (100).

37. The method of Claim 23, wherein said secondary transmission link (116) comprises an OAM link.

38. A method for improving the OAM (Operations and Maintenance) of a radio base station (104) in a communications network (100), said radio base station (104) including a radio section coupled to said communications network (100) by a link, and a test mobile station substantially co-located with said radio section, said method **characterized by**
transmitting a message in response to a predefined condition associated with said link; and
conveying OAM information between said radio base station (104) and a terminal via a radio channel.

39. The method of Claim 38, wherein said radio section includes a radio head unit.

40. The method of Claim 38, wherein said terminal includes a mobile terminal.

41. The method of Claim 38, wherein said radio channel includes a radio service channel (214).

42. The method of Claim 38, wherein said radio section includes a mast-mounted section.

43. The method of Claim 38. wherein said radio base station (104) includes a mast-mounted radio base station.

44. The method of Claim 38, wherein said predefined condition includes an operational failure.

## Patentansprüche

1. Ein System zum Verbessern der OAM (Operations and Maintenance - Betrieb und Wartung) eines Mobilkommunikationsnetzwerkes (100) mit einem oberen Knoten (110) und einem unteren Knoten, wobei der obere Knoten (110) mit dem unteren Knoten durch eine Primärübertragungsverbindung (105) verbunden ist,
**gekennzeichnet durch**
eine Testmobilstation, die mit dem unteren Knoten zumindest für Überwachungsoperationen des unteren Knotens gekoppelt ist, und weiterhin, zumindest, wenn die Primärübertragungsverbindung nicht in Betrieb ist, mit dem oberen Knoten (110) über eine Sekundärübertragungsverbindung (116) gekoppelt ist, die eine Funkverbindung über ein Funkschnittstelle zwischen der Testmobilstation und dem oberen Knoten (110) ist, um OAM-Information zu übertragen.

2. Das System nach Anspruch 1, wobei die Primärübertragungsverbindung (105) eine Leitungsdrahtverbindung zwischen dem oberen Knoten (110) und dem unteren Knoten umfasst.

3. Das System nach Anspruch 1, wobei die Primärübertragungsverbindung (105) eine drahtlose Verbindung zwischen dem oberen Knoten (110) und dem unteren Knoten umfasst.

4. Das System nach Anspruch 1, wobei die Testmobilstation mit dem oberen Knoten (110) über eine Sekundärübertragungsverbindung (116) für eine vorherbestimmte Dauer gekoppelt ist, wenn die Primärübertragungsverbindung (105) in Betrieb ist.

5. Das System nach Anspruch 1, wobei der obere Knoten eine Funknetzwerksteuerung (110) umfasst und der untere Knoten eine Funkbasisstation (104) umfasst.

6. Das System nach Anspruch 1, wobei der obere Knoten eine Basisstationssteuerung umfasst und der untere Knoten eine Basisstation umfasst.

7. Das System nach Anspruch 1, wobei die Primärübertragungsverbindung (105) eine Iub-Verbindung ist.

8. Das System nach Anspruch 1, wobei die Sekundärübertragungsverbindung (116) einen zugewiesenen und/oder gemeinsamen Kanal umfasst.

9. Das System nach Anspruch 1, wobei das Kommunikationsnetzwerk (100) durch ein TDMA- (Time Division Multiple Access) Netzwerk **gekennzeichnet** ist.

10. Das System nach Anspruch 1, wobei das Kommunikationsnetzwerk (100) durch ein CDMA- (Code Division Multiple Access) Netzwerk **gekennzeichnet** ist.

11. Das System nach Anspruch 1, wobei die Sekundärübertragungsverbindung (116) in Betrieb ist, um paketvermittelte Information zu übertragen.

12. Das System nach Anspruch 1, wobei die Sekundärübertragungsverbindung (116) in Betrieb ist, um leitungsvermittelte Information zu übertragen.

13. Das System nach Anspruch 1, wobei die Sekundärübertragungsverbindung (116) in Betrieb ist, um OAM-Information zwischen der Testmobilstation und dem oberen Knoten (110) zu übertragen.

14. Das System nach Anspruch 1, wobei die Sekundärübertragungsverbindung (116) in Betrieb ist, um OAM-Inrormation zwischen der Testmobilstation und einem OAM-Subsystem (112), das mit dem Kommunikationsnetzwerk (100) assoziiert ist, zu übertragen.

15. Das System nach Anspruch 1, wobei die Sekundärübertragungsverbindung (116) eine OAM-Übertragungsverbindung umfasst.

16. Ein System zum Verbessern der OAM (Betrieb und Wartung) einer Funkbasisstation (104) in einem Kommunikationsnetzwerk (100) mit einer Funksektion der Funkbasisstation (104), wobei die Funksektion mit dem Kommunikationsnetzwerk (100) über eine Verbindung gekoppelt ist; wobei das System
**gekennzeichnet ist, durch**
eine Testmobilstation, die im Wesentlichen mit der Funksektion der Funkbasisstation zusammengelegt ist, und in Betrieb ist, um:
eine Meldung als Antwort auf eine vordefinierte Bedingung, die mit der Verbindung assoziiert ist, zu übertragen; und
eine OAM-Information zwischen der Funkbasisstation und einem Endgerät über einen Funkkanal zu übertragen.

17. Das System nach Anspruch 16, wobei die Funksektion durch eine Funkkopfeinheit **gekennzeichnet** ist.

18. Das System nach Anspruch 16, wobei das Endgerät ein mobiles Endgerät umfasst.

19. Das System nach Anspruch 16, wobei der Funkkanal einen Funkservicekanal (214) umfasst.

20. Das System nach Anspruch 16, wobei die Funksektion eine mastmontierte Sektion umfasst.

21. Das System nach Anspruch 16, wobei die Funkbasisstation (104) eine mastmontierte Funkbasisstation umfasst.

22. Das System nach Anspruch 16, wobei die vordefinierte Bedingung eine Störung umfasst.

23. Ein Verfahren zum Verbessern der OAM (Betrieb und Wartung) eines Mobilkommunikationsnetzwerkes (100), **gekennzeichnet durch**
Verbinden eines oberen Knotens (110) mit einem unteren Knoten **durch** eine Primärübertragungsverbindung (105);
Verbinden einer Testmobilstation mit dem unteren Knoten, wobei die Testmobilstation den unteren Knoten überwacht;
Verbinden der Testmobilstation, wenn die Primärübertragungsverbindung (105) außer Betrieb gerät, mit dem oberen Knoten (110) über eine Sekundärübertragungsverbirdung (116), die eine Funkverbindung über eine Funkschnittstelle zwischen der Testmobilstation und dem oberen Knoten (110) ist; und
Übertragen von OAM-Information zwischen dem unteren Knoten und dem oberen Knoten (110) über die Sekundärübertragungsverbindung (116).

24. Das Verfahren nach Anspruch 23, wobei die Primärübertragungsverbindung (105) eine Leitungsdrahtverbindung zwischen dem oberen Knoten (110) und dem unteren Knoten umfasst.

25. Das Verfahren nach Anspruch 23, wobei die Primärübertragungsverbindung (105) eine drahtlose Verbindung zwischen dem oberen Knoten (110) und dem unteren Knoten umfasst.

26. Das Verfahren nach Anspruch 23, wobei die Testmobilstation mit dem oberen Knoten (110) über eine Sekundärübertragungsverbindung (116) für eine vorbestimmte Dauer gekoppelt ist, wenn die Primärübertragungsverbindung (105) in Betrieb ist.

27. Das Verfahren nach Anspruch 23, wobei der obere Knoten eine Funknetzwerksteuerung(110) umfasst, und der untere Knoten eine Funkbasisstation (104) umfasst.

28. Das Verfahren nach Anspruch 23, wobei der obere Knoten eine Basisstationssteuerung umfasst, und der untere Knoten eine Basisstation umfasst.

29. Das Verfahren nach Anspruch 23, wobei die Primärübertragungsverbindung (105) eine Iub-Verbindung umfasst.

30. Das Verfahren nach Anspruch 23, wobei die Sekundärübertragungsverbindung (116) einen zugewiesenen und/oder gemeinsamen Kanal umfasst.

31. Das Verfahren nach Anspruch 23, wobei das Kommunikationsnetzwerk (100) durch ein TDMA- (Time Division Multiple Access) Netzwerk **gekennzeichnet** ist.

32. Das Verfahren nach Anspruch 23, wobei das Kommunikationsnetzwerk (100) durch ein CDMA- (Code Division Multiple Accesss) Netzwerk **gekennzeichnet** ist.

33. Das Verfahren nach Anspruch 23, wobei die Sekundärübertragungsverbindung (116) in Betrieb ist, um paketvermittelte Information zu übertragen.

34. Das Verfahren nach Anspruch 23, wobei die Sekundärübertragungsverbindung (116) in Betrieb ist, um leitungsvermittelte Information zu übertragen.

35. Das Verfahren nach Anspruch 23, wobei die Sekundärübertragungsverbindung (116) in Betrieb ist, um OAM-Information zwischen der Testmobilstation und dem oberen Knoten (110) zu übertragen.

36. Das Verfahren nach Anspruch 23, wobei die Sekundärübertragungsverbindung (116) in Betrieb ist, um OAM-Information zwischen der Testmobilstation und einem OAM-Subsystem (112) zu übertragen, das mit dem Kommunikationsnetzwerk (100) assoziiert ist.

37. Das Verfahren nach Anspruch 23, wobei die Sekundärübertragungsverbindung (116) eine OAM-Verbindung umfasst.

38. Ein Verfahren zum Verbessern der OAM (Betrieb und Wartung) einer Funkbasisstation (104) in einem Kommunikationsnetzwerk (100), wobei die Funkbasisstation (104) eine Funksektion umfasst, die mit dem Kommunikationsnetzwerk (100) über eine Verbindung gekoppelt ist, und eine Testmobilstation, die im Wesentlichen mit der Funksektion zusammengelegt ist, wobei das Verfahren **gekennzeichnet ist, durch** Übertragen einer Meldung als Antwort auf eine vorherdefinierte Bedingung, die mit der Verbindung assoziiert ist; und
Übertragen von OAM-Information zwischen der Funkbasisstation (104) und einem Endgerät über einen Funkkanal.

39. Das Verfahren nach Anspruch 38, wobei die Funksektion eine Funkkopfeinheit umfasst.

40. Das Verfahren nach Anspruch 38, wobei das Endgerät ein mobiles Endgerät umfasst.

41. Das Verfahren nach Anspruch 38, wobei der Funkkanal einen Funkservicekanal (214) umfasst.

42. Das Verfahren nach Anspruch 38, wobei die Funksektion eine mastmontierte Sektion umfasst.

43. Das Verfahren nach Anspruch 38, wobei die Funkbasisstation (104) eine mastmontierte Funkbasisstation umfasst.

44. Das Verfahren nach Anspruch 38, wobei die vorherdefinierte Bedingung eine Störung umfasst.

## Revendications

1. Système pour améliorer le dispositif OAM (Opérations et Maintenance) d'un réseau de télécommunications mobiles (100) ayant un noeud supérieur (110) et un noeud inférieur, ledit noeud supérieur (110) étant connecté audit noeud inférieur par une liaison de transmission primaire (105), **caractérisé par** :
une station mobile de test reliée audit noeud inférieur pour au moins surveiller les opérations effectuées par ledit noeud inférieur, et en outre reliées, du moins lorsque ladite liaison de transmission primaire est non fonctionnelle, audit noeud supérieur (110) par l'intermédiaire d'une liaison de transmission secondaire (116) qui est une connexion radio par l'intermédiaire d'une interface radio entre ladite station mobile de test et ledit noeud supérieur (110) pour acheminer des informations OAM.

2. Système selon la revendication 1, dans lequel ladite liaison de transmission primaire (105) comprend une connexion par ligne fixe entre ledit noeud supérieur (110) et ledit noeud inférieur.

3. Système selon la revendication 1, dans lequel ladite liaison de transmission primaire (105) comprend une connexion sans fil entre ledit noeud supérieur (110) et ledit noeud inférieur.

4. Système selon la revendication 1, dans lequel ladite station mobile de test est reliée audit noeud supérieur (110) par l'intermédiaire de ladite liaison de transmission secondaire (116) pendant une durée prédéterminée lorsque ladite liaison de transmission primaire (105) est fonctionnelle.

5. Système selon la revendication 1, dans lequel ledit noeud supérieur comprend une unité de commande de réseau radio (110) et ledit noeud inférieur comprend une station de base radio (104).

6. Système selon la revendication 1, dans lequel ledit noeud supérieur comprend une unité de commande de station de base et ledit noeud inférieur comprend une station de base.

7. Système selon la revendication 1, dans lequel ladite liaison de transmission primaire (105) comprend une liaison Iub.

8. Système selon la revendication 1, dans lequel ladite liaison de transmission secondaire (116) comprend un canal spécialisé et/ou commun.

9. Système selon la revendication 1, dans lequel ledit réseau de télécommunications (100) est **caractérisé par** un réseau à accès multiple par répartition temporelle.

10. Système selon la revendication 1, dans lequel ledit réseau de télécommunications (100) est **caractérisé par** un réseau à accès multiple par répartition de code.

11. Système selon la revendication 1, dans lequel ladite liaison de transmission secondaire (116) a pour fonction d'acheminer des informations à commutation de paquets.

12. Système selon la revendication 1, dans lequel ladite liaison de transmission secondaire (116) a pour fonction d'acheminer des informations à commutation de circuits.

13. Système selon la revendication 1, dans lequel ladite liaison de transmission secondaire (116) a pour fonction d'acheminer des informations OAM entre ladite station mobile de test et ledit noeud supérieur (110).

14. Système selon la revendication 1, dans lequel ladite liaison de transmission secondaire (116) a pour fonction d'acheminer des informations OAM entre ladite station mobile de test et un sous-système OAM (112) associé audit réseau de télécommunications (100).

15. Système selon la revendication 1, dans lequel ladite liaison de transmission secondaire (116) comprend une liaison de transmission OAM.

16. Système pour améliorer le dispositif OAM (Opérations et Maintenance) d'une station de base radio dans un réseau de télécommunications (100) ayant une section radio de ladite station de base radio (104), ladite station radio étant reliée audit réseau de télécommunications (100) par une liaison ; ledit système étant **caractérisé par**
une station mobile de test sensiblement colocalisée avec la section radio de ladite station de base radio et ayant pour fonction de :
transmettre un message en réponse à une condition prédéfinie associée à ladite liaison ; et
acheminer des informations OAM entre ladite station de base radio et un terminal via un canal radio.

17. Système selon la revendication 16, dans lequel ladite section radio est **caractérisée par** une unité de tête radio.

18. Système selon la revendication 16, dans lequel ledit terminal comprend un terminal mobile.

19. Système selon la revendication 16, dans lequel ledit canal radio comprend un canal de service radio (214).

20. Système selon la revendication 16, dans lequel ladite section radio comprend une section montée sur mât.

21. Système selon la revendication 16, dans lequel ladite station de base radio (104) comprend une station de base radio montée sur mât.

22. Système selon la revendication 16, dans lequel ladite condition prédéfinie comprend une panne de fonctionnement.

23. Procédé pour améliorer le dispositif OAM (Opérations et Maintenance) d'un réseau de télécommunications mobiles (100), **caractérisé par**
la connexion d'un noeud supérieur (110) à un noeud inférieur par une liaison de transmission primaire (105) ;
la connexion d'une station mobile de test audit noeud inférieur, ladite station mobile de test surveillant ledit noeud inférieur ;
la connexion, si ladite liaison de transmission primaire (105) devient non fonctionnelle, de ladite station mobile de test audit noeud supérieur (110) par l'intermédiaire d'une liaison de transmission secondaire (116) qui est une connexion radio par l'intermédiaire d'une interface radio entre ladite station mobile de test et ledit noeud supérieur (110) ; et
l'acheminement d'informations OAM entre ledit noeud inférieur et ledit noeud supérieur (110) par l'intermédiaire de ladite liaison de transmission secondaire (116).

24. Procédé selon la revendication 23, dans lequel ladite liaison de transmission primaire (105) comprend une connexion par ligne fixe entre ledit noeud supérieur (110) et ledit noeud inférieur.

25. Procédé selon la revendication 23, dans lequel ladite liaison de transmission primaire (105) comprend une connexion sans fil entre ledit noeud supérieur (110) et ledit noeud inférieur.

26. Procédé selon la revendication 23, dans lequel ladite station mobile de test est reliée audit noeud supérieur (110) par l'intermédiaire de ladite liaison de transmission secondaire (116) pendant une durée prédéterminée lorsque ladite liaison de transmission primaire (105) est fonctionnelle.

27. Procédé selon la revendication 23, dans lequel ledit noeud supérieur comprend une unité de commande de réseau radio (110) et ledit noeud inférieur comprend une station de base radio (104).

28. Procédé selon la revendication 23, dans lequel ledit noeud supérieur comprend une unité de commande de station de base et ledit noeud inférieur comprend une station de base.

29. Procédé selon la revendication 23, dans lequel ladite liaison de transmission primaire (105) comprend une liaison Iub.

30. Procédé selon la revendication 23, dans lequel ladite liaison de transmission secondaire (116) comprend un canal spécialisé et/ou commun.

31. Procédé selon la revendication 23, dans lequel ledit réseau de télécommunications (100) est **caractérisé par** un réseau à accès multiple par répartition temporelle.

32. Procédé selon la revendication 23, dans lequel ledit réseau de télécommunications (100) est **caractérisé par** un réseau à accès multiple par répartition de code.

33. Procédé selon la revendication 23, dans lequel ladite liaison de transmission secondaire (116) a pour fonction d'acheminer des informations à commutation de paquets.

34. Procédé selon la revendication 23, dans lequel ladite liaison de transmission secondaire (116) a pour fonction d'acheminer des informations à commutation de circuits.

35. Procédé selon la revendication 23, dans lequel ladite liaison de transmission secondaire (116) a pour fonction d'acheminer des informations OAM entre ladite station mobile de test et ledit noeud supérieur (110).

36. Procédé selon la revendication 23, dans lequel ladite liaison de transmission secondaire (116) a pour fonction d'acheminer des informations OAM entre ladite station mobile de test et un sous-système OAM (112) associé audit réseau de télécommunications (100).

37. Procédé selon la revendication 23, dans lequel ladite liaison de transmission secondaire (116) comprend une liaison OAM.

38. Procédé d'amélioration du dispositif OAM (Opérations et Maintenance) d'une station de base radio (104) dans un réseau de télécommunications (100), ladite station de base radio (104) comprenant une section radio reliée audit réseau de télécommunications (100) par une liaison, et une station mobile de test sensiblement colocalisée avec ladite section radio, ledit procédé étant
**caractérisé par** :
la transmission d'un message en réponse à une condition prédéfinie associée à ladite liaison ;
l'acheminement d'informations OAM entre ladite station de base radio (104) et un terminal via un canal radio.

39. Procédé selon la revendication 38, dans lequel ladite section radio comprend une unité de tête radio.

40. Procédé selon la revendication 38, dans lequel ledit terminal comprend un terminal mobile.

41. Procédé selon la revendication 38, dans lequel ledit canal radio comprend un canal de service radio (214).

42. Procédé selon la revendication 38, dans lequel ladite section radio comprend une section montée sur mât.

43. Procédé selon la revendication 38, dans lequel ladite station de base radio (104) comprend une station de base radio montée sur mât.

44. Procédé selon la revendication 38, dans lequel ladite condition prédéfinie comprend une panne de fonctionnement.
